# EUROPÄISCHE PATENTSCHRIFT

(11) **EP 1 091 159 B1**
(45) Veröffentlichungstag und Bekanntmachung des Hinweises auf die Patenterteilung: **25.01.2006**
(21) Anmeldenummer: 00114685.1
(22) Anmeldetag: 08.07.2000
(51) Int. Cl.: F16L 55/28, F16L 55/32, B65H 75/36, G03B 17/00

(54) **Inspektionsgerät mit einer Videokamera für Hohlräume**
Cavity inspection device with video camera
Appareil d'inspection de cavités avec caméra vidéo

(30) Priorität: 22.07.1999 DE 19934527
(43) Veröffentlichungstag der Anmeldung: 11.04.2001
(73) Patentinhaber: Rothenberger Werkzeuge Aktiengesellschaft, 65779 Kelkheim / Ts. (DE)
(72) Erfinder: Kratz, Klaus, 65207 Wiesbaden (DE); Doepner, Kristian, 33098 Paderborn (DE); Trüschler, Jürgen, Dipl.Ing., 37247 Grossalmerode (DE); Rothenberger, Bernd, 61476 Kronberg (DE)
(74) Vertreter: Zapfe, Hans

(56) Entgegenhaltungen:
- DE-A- 4 134 886
- GB-A- 2 172 079
- US-A- 2 926 775
- US-A- 3 673 627

## Beschreibung

Die Erfindung betrifft eine tragbare Geräteeinheit für die Inspektion von Hohlräumen nach dem Oberbegriff des Patentanspruchs 1.

Es sind Inspektionsgeräte für Rohrleitungen bekannt, bei denen eine Video-Kamera an einem Fahrgerät mit einem Motor, angetriebenen Rollen oder Raupenketten befestigt ist, das ein flexibles Signalkabel hinter sich herzieht. Sowohl bezüglich der Durchmesserunterschiede, die mit ein und demselben Gerät bedient werden können, als auch bezüglich des minimalen Durchmessers solcher Rohrleitungen sind enge Grenzen gesetzt. Obwohl diese bekannten Geräte auch für die Inspektion beliebiger Rohrleitungen verwendbar sind, ist die Anwendung vornehmlich für hochwertige Industrieanlagen vorgesehen, insbesondere für Kraftwerksbetriebe (z.B. Reaktoren) bestimmt, da sie extrem teuer und daher für Handwerksbetriebe im allgemeinen weniger geeignet sind.

Zwei Firmendruckschriften der Firma TOKYO ELECTRONIC INDUSTRY CO. LTD. in Japan zeigen verschiedene Inspektionsgeräte für die Fernsehinspektion von Hohlräumen (Rohrleitungen) mittels Video-Kameras und Video- Kabeln sowie mit Kabel-Haspeln, wobei die Haspeln mit senkrechten Haspelebenen und waagrechten Drehachsen von Rahmengebilden aus gebogenen Rohren umgeben sind. An diesen Rahmengebilden sind auch Monitore befestigt. Weiterhin offenbart sind mehrteilige Geräte mit senkrechter Haspelebene auf Rollen, davon getrennten Fahrgeräten mit Video-Kameras und davon wiederum getrennten fahrbaren Schränken. In allen Fällen sind Haspeln mit senkrechten Kabelwindungen und waagrechten Drehachsen vorgesehen. Die Fahrgeräte mit Video-Kameras und eigenen Antrieben sind davon funktionell getrennt. Diese zuletzt genannten Geräte haben auch flexible Schleppkabel Die Monitore sind dabei entweder auf einem Schrank oder einem Haspelgestell aufgestellt. Auch die übrigen Geräte zeigen stets Haspeln mit senkrechten Haspelebenen bzw. Kabelwindungen und waagrechten Drehachsen. Die Möglichkeit eines Betriebes in um 90 Grad umg:elegten Raumlagen ist nicht erkennbar.

Die Erfindung befaßt sich vielmehr mit solchen Inspektionsgeräten, die eine Haspel und ein flexibles, aber genügend biegesteifes Signalkabel aufweisen, durch das die Video-Kamera über Entfernungen bis zu 30 oder 40 Metern und darüber in enge Rohrleitungssysteme eingeschoben und aus diesen wieder zurückgezogen werden kann, ohne daß am Kopf des Signalkabels ein Antrieb vorhanden sein müßte. Die Eigenschaften solcher Signalkabel werden in der Detailbeschreibung näher erläutert.

Bei der Mehrzahl der auf dem Markt befindlichen Geräte sind die Haspel mit der Viodeo-Kamera und das Bildschirmgerät (Monitor) als getrennte Einheiten ausgeführt, die vor dem Einsatz aufgebaut und signaltechnisch miteinander verbunden werden müssen. Eine solche Lösung ist in der GB 2 172 079 A beschrieben. Hierbei muß die Haspel in einer für die Bedienungsperson ergonomischen Stellung aufgebaut werden, wobei diese Stellung während des Inspektionsvorgangs auch zu verändern ist. In diesem Fall muß das Bildschirmgerät zur Erhaltung eines günstigen Blickwinkels entsprechend nachgerückt werden, wofür die Bedienungsperson an sich eine "dritte Hand" benötigen würde.

Unter den Bezeichnungen "itv 25 M" und "OPTIMESS" sind auch bereits Inspektionsgeräte mit senkrecht stehenden Haspeln bekannt, bei denen die Haspeln mit waagrechten Haspelachsen in vierbeinigen Ständern gelagert sind. Dadurch haben die Haspeln wegen ihres durch die Länge und die Steifigkeit des Signalkabels vorgegebenen Durchmessers einen sehr großen Abstand ihres Massenschwerpunktes über der Aufstellfläche, so daß beim Einzug oder Ausschub des Signalkabels eine erhebliche Kippneigung besteht. Bei beiden bekannten Inspektionsgeräten sind die Bildschirmgeräte seitlich über die Gestellabmessungen ausladend und fliegend angesetzt, wodurch die Kippneigung weiter vergrößert wird.

Durch zwei Werbeschriften der Firma RIDGID/Kollmann in USA mit den überschriften "SeeSnake Diagnostic Tools" vom März 1996 und "Drain Cleaners" vom Januar 1999 sind Rohrinspektionsgeräte bekannt, bei denen eine Haspel mit einem schubsteifen Signalkabel innerhalb eines Rahmengestells mit auf dem Kopf stehenden Y-förmigen Seitenteilen aus Rohren angeordnet ist. Das Rahmengestell besitzt Aufstellfüsse-für eine stehende Positionierung der Haspel, und eines der Seitenteile besitzt weitere, seitlich abstehende Aufstellfüsse für eine liegende Positionierung der Haspel, parallel zu einer Aufstellfläche. Die Bildschirmgeräte bzw. Monitore sind aber zwecks aufrechter Bildwidergabe vom Rahmengestell getrennt und werden in bezug auf eine Rohr-Einführungsöffnung für das Signalkabel im Dreieck auf einer Bodenfläche aufgestellt, so dass die Bedienungsperson den Blick abwechselnd auf die Haspel, den Monitor und die Rohreinführungsöffnung richten muss. Es handelt sich um keine Geräteeinheit; vielmehr müssen die Haspel mit ihrem Gestell einerseits und der Monitor andererseits getrennt voneinander transportiert werden, was sich bei Auf- oder Abstieg über Leitern oder enge. Treppen als hinderlich erweist. Bei senkrechter Positionierung der Haspel hat diese zusammen mit lhrem schmalen Gestell nur eine geringe Standfestigkeit, so dass schon deswegen die Gefahr eines Umfallens gegeben ist, weil durch schrägen Zug oder Schub am Signalkabel Querkräfte auf das Haspelgestell ausgeübt werden. Die Aufstellung des Monitors unmittelbar auf dem Boden erschwert die Beobachtung durch eine stehende Person. Ausserdem müssen die Signalkontakte der Haspel und des Monitors vor der Inbetriebnahme erst über ein entsprechend langes Kabel miteinander verbunden werden.

Unter den Bezeichnungen "Minispektor 2.3c" und "flexiprobe ELS" sind weitere Inspektionsgeräte mit senkrecht stehenden Haspeln bekannt, bei denen die Haspeln mit waagrechten Haspelachsen in Ständern gelagert sind. In diesen Fällen sind die Bildschirmgeräte über den Haspeln angeordnet, wodurch die Massenschwerpunkte so hoch angeordnet sind, daß die Kippgefahr bei Bewegungen des Signalkabels noch weiter vergrößert wird. Die "flexiprobe ELS" ist das Nachfolgegerät der nachstehend näher beschriebenen "farb mini flexiprobe" der Firma PEARPOINT.

Durch die Firmendruckschrift "farb mini flexiprobe" der Firma PEARPOINT in Großbritannien ist ein weiteres Gerät dieser Art bekannt, bei dem auf der Rückseite eines Kunststoffgehäuses eine senkrechte Haspel mit waagrechter Achse für ein Signalkabel angeordnet ist und bei dem in der Vorderseite ein Fenster angeordnet ist, in dem sich ein Bildschirmgerät befindet, das durch ein Gestänge mit vier Achsen aus dem Fenster herausschwenkbar ist. In versenkter Stellung des Bildschirmgeräts verläuft die Abzugsrichtung des Signalkabels senkrecht zur Achse der Bildröhre, so daß das Gerät nur dann ergonomisch bedient werden kann, wenn das Bildschirmgerät aus dem Fenster herausgeschwenkt ist. Dadurch aber wird der ohnehin auf hohem Niveau liegende Schwerpunkt des Geräts verlagert. Die Gebrauchsstellung wird durch die senkrechte Stellung der Haspel vorgegeben.

Das vorstehende, sehr schwere Gerät mit einem Gewicht zwischen 20 und 25 Kilogramm war von 1991 bis 1999 auf dem Markt und wurde dann durch das gleichfalls beschriebene hochbeinige und wenig standfeste Gerät "flexiprobe ELS" der gleichen Herstellerin ersetzt. Aus der Gerätekonstruktion und der zugehörigen Bedienungsanleitung geht nicht hervor, dass das ältere Gerät auch umgelegt benutzt werden kann oder soll. Dagegen sprechen grossflächige Gummisohlen für den stehenden Betrieb, die filigrane und ungeschützte Ausbildung von oberen, aus dem Kunststoff des Gehäuses gebildeten Vorsprüngen in der Nähe des Tragegriffs, die ungeschützten, gleichfalls aus dem Kunststoff des Gehäuses gebildeten Seitenflächen der Träger für die Gummisohlen und die abwärts gerichtete Führung des Kabels am Austritt aus dem Gehäuse. Insbesondere die Bedienungsanleitung, das "USER MANUAL", zeigt das Gerät ausschliesslich in der stehenden Betriebsstellung, und die Raumkoordinaten sind in bezug auf diese eindeutigen bildlichen Darstellungen als "oben, unten, hinten und vorn" definiert. Allein für die Ausrichtung des Bildschirmgeräts, des Monitors, relativ zum Gehäuse sind vier einzustellende Präzisionsgelenke mit Rohrverbindungen zum Hindurchführen eines Kabelbündels für die Steuer- und Videosignale vorhanden. Der Verkaufspreis lag 1997 bei etwa DM 33.250,-- gegenüber einem Preis von etwa DM 4.895,-- für den Erfindungsgegenstand Anfang 2001, also bei etwa dem 6,8-Fachen. Das Gewicht des Erfindungsgegenstandes liegt bei etwas mehr als der Hälfte der "farb mini flexiprobe".

Durch den Firmenprospekt der Firma IBAK "Rohrleitungsfernsehanlagen RADIAX + HAF", 1992, und das DE 298 16 231 U1 sind Straßenfahrzeuge mit eingebauten Bildschirm-Arbeitsplätzen mit Tischen und Stühlen und am Fahrzeug angeordneten Haspeln für Video-Kabel bekannt, bei denen an die Kabel Kameras mit Rohrantrieben angeschtossen sind. Die in dem DE 298 16 231 U1 beschriebenen "Kanal-Roboter" sind teuer, groß und entsprechend schwer und müssen mit Seilwinden in große Kanalschächte "abgeseilt" werden. Dazu müssen die Seilwinden entweder aus dem Fahrzeug herausgeschwenkt werden (ISAK) oder teleskopartig herausgefahren werden (DE 298 16 231 U1). Zu diesem Zweck muß das Heck des Fahrzeugs, in allen Fällen ein LKW oder Kleinlaster, in unmittelbare Nähe eines Kanalschachtes gefahren werden. Die Kabel dienen nicht zum Kameravorschub und sind hierzu auch zu "schlaff", sie werden vom Roboter hinterher gezogen und müssen beim Rückzug von der angetriebenen Haspel wieder eingezogen werden. Es ist wegen der Entfernung auch unmöglich, gleichzeitig das Rohrfahrzeug bzw. den Roboter zu manipulieren und den Bildschirm zu beobachten. Für den Einsatz in beengten Räumen, z.B. in Keltern, und für enge Rohrleitungen, z.B. Verbindungsleitungen vom Haus zum Straßenkanal, sind die bekannten gattungsfremden Geräte nicht nur nicht geeignet sondern auch nicht vorgesehen. Die genannten Schriften befassen sich weder mit der räumlichen Zuordnung eines Bildschirmgeräts zur Kabelhaspel noch mit der Standfestigkeit des Gesamtgeräts.

Durch die DE 41 34 886 A1 ist eine ähnliche Trennung von Kamera und Strassenfahrzeug bekannt. Auch dabei werden Video-Kameras ferngesteuert in Rohrleitungen oder in einem Kanalschacht bewegt, um deren Zustand zu inspizieren. Dazu ist es auch bekannt, eine Video-Kamera und ggf. einen Scheinwerfer am Heck eines Straßenfahrzeugs anzubringen, um den oberirdischen Arbeitsplatz zu überwachen. Für die überwachung aller Videosignale aus der Rohrleitung ist jedoch im Innen des Straßenfahrzeugs ein Beobachtungs- und Steuerstand angeordnet. Es handelt sich also auch hierbei nicht um eine von Hand tragbare Geräteeinheit kleinstmöglicher Abmessungen. Außerdem ist kein Vorschub der Video-Kamera durch ein entsprechend steifes Signalkabel offenbart. Die Schrift offenbart einen gattungsfremden Stand der Technik.

Durch das DE 296 04 682 U1 ist eine Vorrichtung für die Inspektion von Rohrleitungen bekannt, die jedoch wiederum nur aus einer senkrecht stehenden Kabelhaspel mit waagrechter Achse besteht. Dabei soll ein Bedienungspult mit einem Bildschirm und Steuervorrichtungen außerhalb vorgesehen sein; es ist jedoch nicht gesagt, wo. Die Schrift befaßt sich mit der Reparaturmöglichkeit der Verbindungskabel zwischen der Fernsehkamera und der Haspel durch einen abziehbaren Schlauch und mit dem Problem eines Kompromisses zwischen der Notwendigkeit des Einschiebens der Kamera in die Rohrleitung, was eine große Steifigkeit der Kabels erforderlich macht, und einer ausreichenden Flexibiltät zum Aufwickeln, die eine geringe Steifigkeit des Kabels erforderlich macht. Insbesondere ist das Gestell für die Lagerung der Haspel unten nicht nur sehr schmal, sondern auch die Lagerung der Achse liegt - radiusbedingt - sehr hoch, so daß die Standfestigkeit nur gering ist. Die dargestellte Kabelführung über ein Zählwerk macht eine hohe Flexibiltät des Kabels erforderlich. Die genannte Schrift befaßt sich weder mit der räumlichen Zuordnung eines Bildschirmgeräts zur Kabelhaspel noch mit deren Standfestigkeit, kann also zur Lösung der Erfindungsaufgabe nichts beitragen.

Die bekannten Anordnungen der Bildschirmgeräte sind deswegen besonders kritisch, weil die Masse des in der Haspel befindlichen Signalkabels mit zunehmendem Kabelauszug abnimmt, wodurch die negative Wirkung der Lage des Massenschwerpunkts der Bildschirmgeräte schließlich überwiegt.

Der Erfindung liegt daher die Aufgabe zugrunde, eine Geräteeinheit der eingangs beschriebenen Gattung anzugeben die eine Baueinheit von Bildschirmgerät, Gerätegestell und Haspel darstellt, eine ergonomische Bedienung, insbesondere durch eine Person, ermöglicht und kleinstmögliche Abmessungen und eine größtmögliche Standfestigkeit hat. Insbesondere soll die Geräteeinheit von Hand tragbar und auch für kleinste Rohrdurchmesser einsetzbar sein und eine kostengünstige Gestaltung, Herstellungs- und Bedienungsweise ermöglich und besonders geeignet sein für Handwerksbetriebe und Hausverwaltungen und kostspieligere Inspektionssysteme ablösen.

Die Lösung der gestellten Aufgabe erfolgt erfindungsgemäß durch die Merkmale im Kennzeichen des Patentanspruchs 1.

Der Begriff "Bezugsplattform" definiert dabei eine virtuelle Bezugsebene, für eine orientierende Betrachtungsweise. Die "Bezugsplattform" muß dabei nicht als Platte ausgeführt sein, sondern sie kann beispielsweise auch durch eine Öffnung zwischen Rahmenprofilen des Gerätegestells gebildet sein.

Mit diesen Lösungen wird die gestellte Aufgabe in vollem Umfange gelöst, insbesondere wird ein Inspektionsgerät geschaffen, das eine Baueinheit darstellt, eine ergonomische Bedienung ermöglicht, kleinstmögliche Abmessungen, eine größtmögliche Standfestigkeit hat und für kleinste Rohrdurchmesser geeignet ist. Der Erfindungsgegenstand ist wegen seiner kostengünstigen Gestaltung, Herstellungs- und Bedienungsweise besonders geeignet für Handwerksbetriebe und Hausverwaltungen. Er kann kostspielige Inspektionssysteme ablösen.

Mit der vereinfachten und verbilligten Inspektion wird auch die Verantwortung von Hauseigentümern, Grundstücksbesitzern und Verwaltern von Liegenschaften vermindert, die für den Zustand ihrer Abwasserleitungen bis zum Gemeindeanschlußkanal verantwortlich sind. Solche Abwasserleitungen können unbemerkt zerstört werden durch Alterung, Eindringen von Fremdkörpern wie Steinen und Baumwurzeln, ungleichmäßige Bodenabsenkung durch Befahren, Baumaßnahmen u.v.a.m.

Weitere vorteilhafte Ausgestaltungen des Erfindungsgegenstandes ergeben sich aus den Unteransprüchen und aus der Detailbeschreibung, in der auch zusätzliche Vorteile angegeben sind.

### Hier sei stichwortartig nur soviel ausgeführt:

### Einsatzgebiete:

a) Abwasserleitungen auf Privatgrundstücken bis zum Gemeindeanschlußkanal,
b) Grundleitungen, Fall-leitungen, Sammelleitungen, Dach-, Balkon- und Terrassenentwässerungsleitungen, Abwasserhebeanlagen, Rückstawerschlüsse, Anschlußkanäle, Verbindungsleitungen, Umgehungsleitungen, Lüftungsleitungen, insbesondere solche nach DIN 1986 Teil 1,
c) Produktionsleitungen,
d) Schornsteine und Kaminabzüge,
e) Lüftungsschächte und -leitungen,
f) Wandhohlräume, z.b. bei Vorwandmontage, Dach- und andere Hohlräume,
g) Drainageleitungen,
h) Brunnen(schächte),
i) Wärmetauscher und Tanks und
j) Kabelschächte.

### Weitere Vorteile:

1. erleichterte Reinigung durch Abspritzen von Haspel, Signalleitung und Video-Kamera von unten,
2. Beseitigung von Federwirkungen des Haspelsystems,
3. Vermeidung von Gefährdungen der Bedienungsperson und der weiteren Umgebung,
4. Blendfreiheit gegen Ober- und Seitenlicht,
5. Zweihandbedienung,
6. kippsichere Abstellbarkeit auch in Transportstellung,
7. Schutz des Bildschirmgeräts,
8. Unterbringung von Zubehörteilen.

Ein Ausführungsbeispiel des Erfindungsgegenstandes wird nachfolgend anhand der Figuren 1 bis 8 näher erläutert.

Es zeigen:
- Figur 1: eine teilweise geschnittene Seitenansicht des Geräts mit waagrechter Haspel in Betriebsstellung,
- Figur 2: eine Vorderansicht des Gegenstandes nach Figur 1,
- Figur 3: eine Rückansicht des Gegenstandes nach Figur 1,
- Figur 4: eine Seitenansicht einer Video-Kamera in einer Federhülle,
- Figur 5: den unteren Teil von Figur 1, ergänzt durch eine Führungs- und Bremsvorrichtung für das Signalkabel,
- Figur 6: den Gegenstand nach Figur 6 mit seinen Bewegungsmöglichkeiten,
- Figur 7: den Gegenstand nach den Figuren 1 bis 3 in Transportstellung, abgestellt auf einer Aufstellfläche und
- Figur 8: eine Draufsicht auf das Gerätegestell mit einer Prinzipdarstellung der Haspel und der Lösung der Standfestigkeitsprobleme.

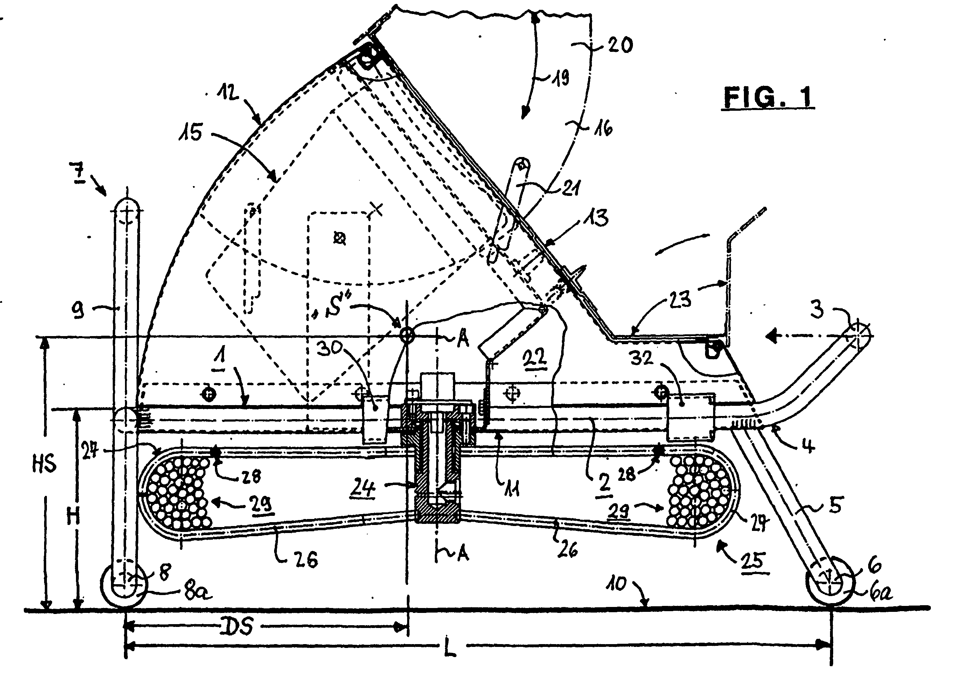

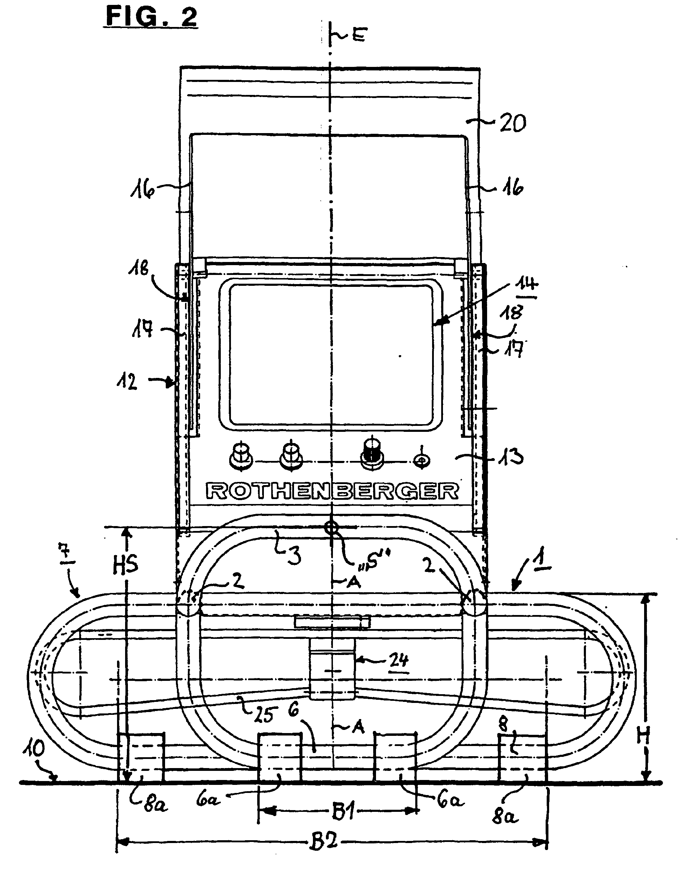

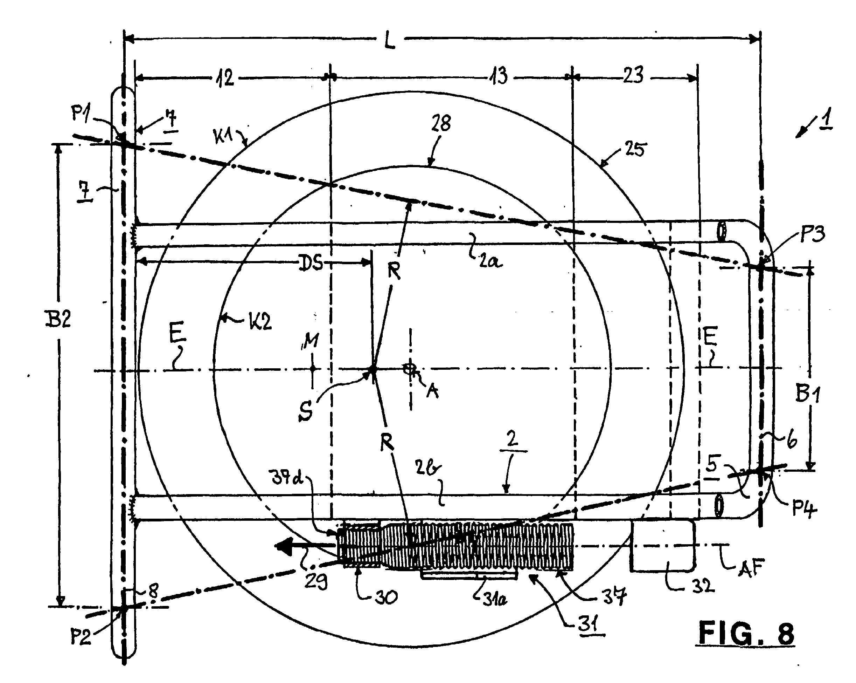

In den Figuren 1 bis 3 ist ein Gerätegestell 1 gezeigt, das aus mehreren gebogenen Rahmenteilen zusammengeschweißt ist. Ein erstes Rahmenteil 2 besteht aus einem etwa U-förmig gebogenen Rohr mit zwei waagrechten Schenkeln 2a und 2b (siehe auch Figur 8), die parallel zur Zeichenebene verlaufen und deren auf der Betrachter- bzw. Vorderseite (siehe Figur 2) liegendes Joch 3 aufwärts gebogen und als Handgriff zum Tragen vorgesehen ist. Etwa im Bereich der Biegestellen 4 ist an den Rahmenteil 2 ein zweites U-förmiges Rahmenteil 5 angeschweißt, dessen Schenkel gleichfalls parallel zur Zeichenebene verlaufen und deren Joch als Aufstellstütze 6 dient. Diese Aufstellstütze 6 kann an möglichst weit voneinenander entfernten Stellen von Stützringen 6a mit einer wirksamen Breite "B1" umgeben sein, die durch einander abgekehrten Enden der beiden Stützringe 6a vorgegeben ist und die u.a. die Standfestigkeit des Geräts gegen Seitenkräfte begründet.

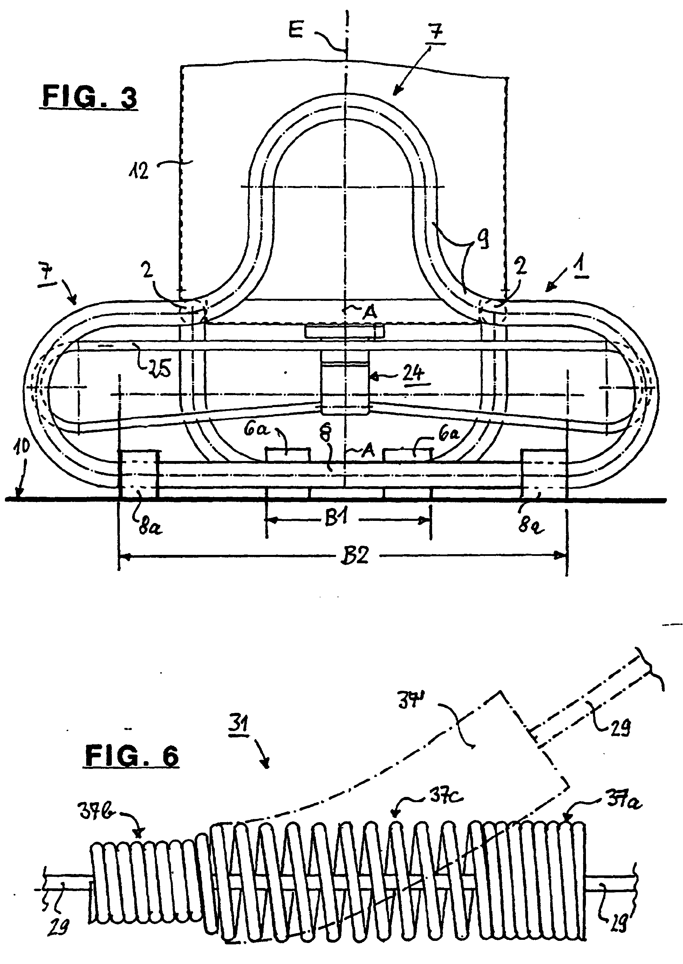

Auf der Rückseite (siehe auch Figur 3) sind die beiden Schenkel des Rahmenteils 2 mit einem dritten Rahmenteil 7 verschweißt, dessen unterer Teilbereich die Form eines Ovals bzw. einer Rennbahn hat. Der gerade untere Teilabschnitt dient als weitere Aufstellstütze 8 mit einer wirksamen Breite "B2", die durch einander abgekehrten Enden zweier Stützringe 8a vorgegeben ist und die gleichfalls die Standfestigkeit des Geräts gegen Seitenkräfte begründet.

Die Stützringe 6a und 8a sind als Gummimuffen ausgeführt, können aber auch weggelassen oder durch andere Mittel gebildet werden, wie durch jeweils einen aufgeschobenen Schlauch aus einem elastomeren Material.

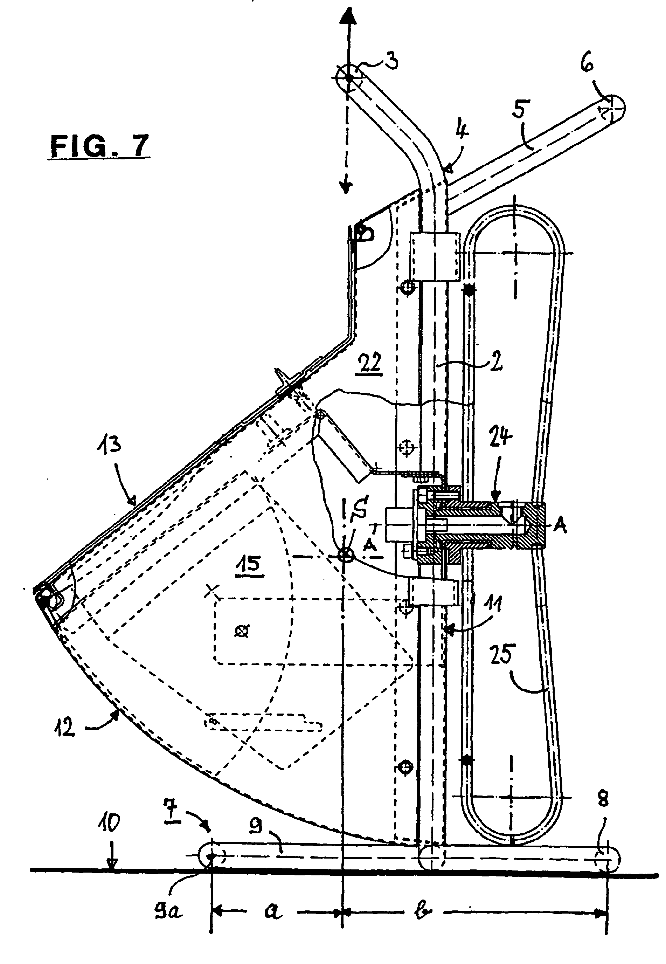

Der obere Teilabschnitt 9 ist in der Mitte U-förmig nach oben gebogen, bietet einen rückseitigen Schutz und verbessert die Standfestigkeit in der Transportstellung nach Figur 7. Die durch den Abstand der Aufstellstützen 6 und 8 gegebene Länge "L" des Gerätegestells 1 begründet die Standfestigkeit des Geräts gegen Längskräfte. Die der Erfindung zugrunde liegenden überlegungen zur Lösung der Standfestigkeitsproblem werden weiter unten anhand der Figur 8 näher erläutert.

Die beiden Schenkel 2a und 2b (siehe auch Figur 8) des ersten Rahmenteils 2 definieren eine Bezugsplattform, die in der Betriebsstellung nach den Figuren 1 bis 3 waagrecht bzw. parallel zu einer Aufstellfläche 10 verläuft. In diesem Bereich ist im Gerätegestell 1 ein aus Blech bestehender Boden 11 angeordnet, der das Inspektionsgerät nach unten hin spritzwasserdicht abschließt. Der Begriff "Bezugsplattform" definiert eine virtuelle Bezugsebene, die nicht als Platte ausgeführt sein muß, sondern beispielsweise auch durch die Öffnung zwischen den Schenkeln 2a und 2b gebildet sein kann.

Über dieser Bezugsplattform bzw. dem Boden 11 befindet sich ein Gehäuse 12, dessen Rückseite die Form einer Sektorfläche eines Zylinders hat. Die Vorderseite 13 des Gehäuses 12 ist eben und unter einem Winkel von 50 Grad zur Waagrechten geneigt. Dieser Winkel kann zwischen 10 und 80 Grad variiert werden. In der Vorderseite 13 befindet sich der Bildschirm 14 eines Bildschirmgeräts 15. Die Im Gehäuse 12 noch weiterhin untergebrachten elektronischen Bauteile für die Signalverarbeitung sind Stand der Technik und daher nicht näher dargestellt und beschrieben; gezeigt sind lediglich die Bedienelemente.

Der Bildschirm ist durch einen Deckel 20 verschließbar, der zwei Seitenwände 16 besitzt, um den Bildschirm in Betriebsstellung gegen Ober- und Seitenlicht abzuschirmen. Zwischen der Vorderseite 13 und den Seitenwänden 17 des Gehäuses 12 befinden sich zwei Schlitze 18, in die die Seitenwände 16 des Deckels 20 einschwenkbar sind (Pfeil 19). Die Seitenkanten der Schlitze 18 können Abstreifbürsten gegen das Eindringen von Schmutz tragen, was jedoch nicht näher dargestellt ist. In der Offenstellung des Deckels 20 wird dieser durch eine Klinke 21 gehalten. Unterhalb des Bildschirms 14 befindet sich noch ein Ablagefach 22 für Zubehör, beispielsweise für Akkumulatoren bei netzunabhängigen Geräten. Dieses Ablagefach ist durch einen weiteren, abgewinkelten Deckel 23 verschließbar.

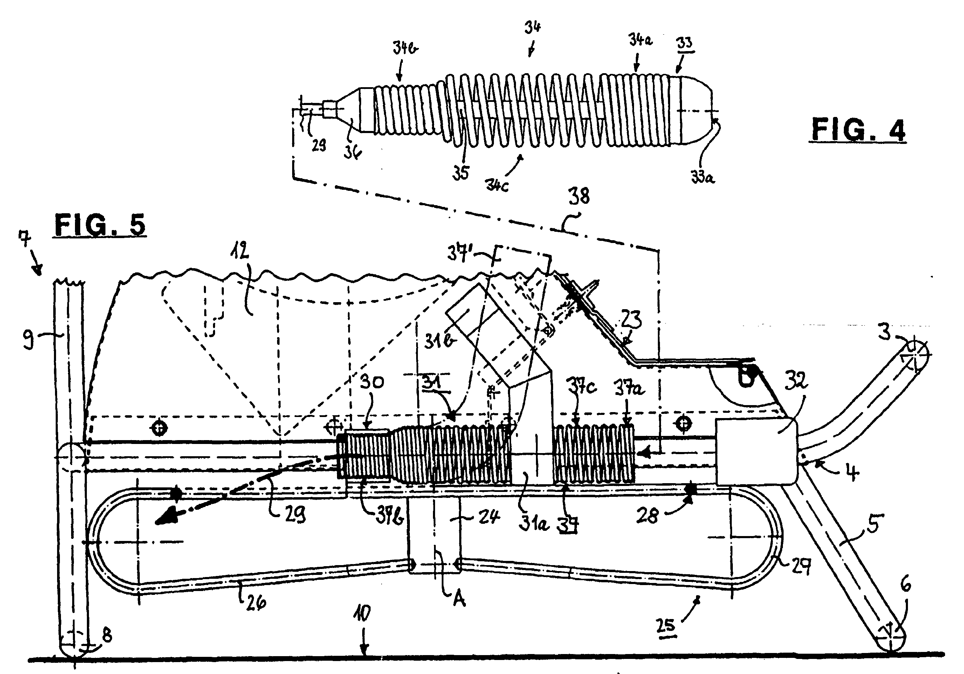

Am Boden 11 ist ein wasserdichtes Drehlager 24 mit senkrechter Drehachse A-A für eine Haspel 25 befestigt, die aus nahezu radialen Speichen 26 besteht, deren Enden 27 halbkreisförmig einwärts gebogen und durch einen Ring 28 verbunden sind. Dadurch dient die Haspel 25 zur Aufnahme eines Signalkabels 29, das über den Ring 28 in etwa tangential zugeführt und abgezogen wird. Am Gerätegestell 1 sind seitlich noch eine Hülse 30 für die Halterung einer Führungs- und Bremsvorrichtung 31 nach Figur 5 und eine Aufnahme 32 für eine Video-Kamera 33 nach Figur 4 befestigt. Durch die Hülse 30 ist auch das Signalkabel 29 hindurchgeführt. In dem Drehlager ist auch eine Anordnung von Schleifringen enthalten, die zur Signalübertragung dienen, aber nicht dargestellt sind.

Die gesamte Anordnung des Inspektionsgeräts ist in Längsrichtung spiegelsymmetrisch zu einer vertikalen Symmetrieebene "E" ausgebildet, was aus den Figuren 2, 3 und 8 hervorgeht. In dieser Symmetrieebene "E" liegen auch die Achse A-A des Drehlagers 24 und der Massenschwerpunkt "S" des Systems, der von dem dritten Rahmenteil 7 einen Abstand "DS" hat, der etwa zwei Fünftel der Länge "L" beträgt. (Figuren 1 und 8). Der Abstand dieses Massenschwerpunkts "S" über der Aufstellfläche 10 hat das Höhenmaß "HS", das in den Figuren 1 und 2 angedeutet ist. Dieses Höhenmaß "HS" ist erfindungsgemäß kleinstmöglich, so daß unter dem Boden 11 des Gehäuses 12 lediglich der kleinstmögliche Abstand für die Unterbringung der Haspel 25 verbleibt.

In Figur 4 ist die Video-Kamera 33 dargestellt, deren Gehäuse in Richtung auf ein wasserdichtes Sichtfenster 33a gut abgerundet ist, hinter dem sich üblicherweise auch eine Beleuchtungseinrichtung befindet. Die VideoKamera 33 ist an einer Schraubenfeder 34 befestigt, die zwei ohne Abstände gewickelte Abschnitte 34a und 34b unterschiedlichen Außendurchmessers und einen auf Abstand gewickelten Abschnitt 34c aufweist. Durch diese Schraubenfeder 34 ist ein gewendeltes Anschlußkabel 35 hindurchgeführt, wobei die Wendelung hier jedoch nicht näher dargestellt ist. Zwischen dem Abschnitt 34b und dem Signalkabel 29 befindet sich ein im wesentlichen konisches Übergangsstück 36, an dem das Signalkabel 29 zug- und verdrehfest festgelegt ist. Der Abschnitt 34a mit der Video-Kamera 33 ist zu Transportzwecken in die Aufnahme 32 einsteckbar (Figuren 1, 5 und 8).

In Figur 5 ist die bereits angedeutete Führungs- und Bremsvorrichtung 31 dargestellt, die gleichfalls aus einer Schraubenfeder 37 besteht. Diese Schraubenfeder 37 besitzt zwei ohne Abstände gewickelte Abschnitte 37a und 37b unterschiedlichen Durchmessers und einen auf Abstand gewickelten Abschnitt 37c. Durch diese Schraubenfeder 37 ist das Signalkabel 29 hindurchgeführt. Der Außendurchmesser des Abschnitts 34b der Schraubenfeder 34 (Figur 4) und der Innendurchmesser des Abschnitts 37a der Schraubenfeder 37 (Figur 5) sind dabei so gewählt, daß der Abschnitt 34b in den Abschnitt 37a zu Transportzwecken einsteckbar ist, was durch die strichpunktierte Linie 38 angedeutet ist. Der Außendurchmesser des Abschnitts 37b der Schraubenfeder 37 ist dabei so bemessen, daß der Abschnitt 37b in die Hülse 30 einsteckbar ist und darin verbleibt (Figuren 1, 5 und 8). Figur 5 ist dabei gegenüber Figur 4 maßstäblich verkleinert.

Das freie Ende der Schraubenfeder 37 kann dabei nach oben in die strichpunktiert angedeutete Lage 37' gebracht werden. Durch einen abgewinkelten Führungsbügel 31a wird die Federachse bei ihrer Krümmung und Streckung durch Bewegungen des Signalkabels 29 in einer senkrechten Ebene geführt. Das obere Ende 31 b des Führungsbügels 31 ist dabei zusätzlich nach außen abgewinkelt, um das senkrechte Einschwenken der Schraubenfeder 37 zu erleichtern. Der aus Blech bestehende Führungsbügel 31a kann auch durch eine entsprechend gebogene Stange aus Metall oder Kunststoff ersetzt werden, was jedoch nicht dargestellt ist.

Die Wirkung der Führungs- und Bremsvorrichtung 31, die auch durch einen flexiblen Schlauch gebildet sein kann, wird zusätzlich anhand von Figur 6 wie folgt erläutert: Durch die Eigensteifigkeit des Signalkabels 29 wird es ermöglicht, die Video-Kamera 33 lediglich durch den Vorschub des Signalkabels 29 um mehrere zig-Meter in ein Kanalisationsrohr einzuschieben, und zwar auch durch Krümmer und Abzweigungen. Durch diese federelastische Eigensteifigkeit hat das in der Haspel 25 befindliche Signalkabel 29 (Figur 1) die Wirkung eines Federwerks, das danach trachtet, das Signalkabel 29 auch dann ständig weiter auszuschieben, wenn die Bedienungsperson die Video-Kamera in der Hand hält oder diese sich bereits in der zu inspizierenden Rohrleitung befindet. Dies wirkt sich hinderlich und gefährlich sowohl für die Bedienungsperson als auch für die Umgebung aus (z.B. "Stolperdraht"). Beim Arbeiten in Badezimmern oder Küchen können dadurch leicht Gebrauchsgegenstände von ihren Aufstellflächen herabgeworfen werden.

Die Führungs- und Bremsvorrichtung 31 verhindert dies sehr wirksam und erleichtert zusätzlich das tangentiale Zurückschieben des Signalkabels 29 in die Haspel 25. Hierbei nimmt nämlich die Führungs- und Bremsvorrichtung 31 beispielsweise die in Figur 6 strichpunktiert dargestellte Stellung ein, wobei es vorteilhaft sein kann, der Führungs- und Bremsvorrichtung 31 durch eine nicht gezeigte Seitenführung nur eine Vertikalbewegung zu ermöglichen.

Die Figur 7 zeigt das Inspektionsgerät nach den Figuren 1 bis 3 in Transportstellung, d.h., vorübergehend abgestellt auf einer Aufstellfläche 10. In dieser Stellung läßt sich das Inspektionsgerät leicht von Hand mittels des Jochs 3 als Handgriff tragen. Es ist ersichtlich, daß das dritte Rahmenteil 7 auch hierbei eine ausgezeichnete Standfestigkeit besitzt, indem nämlich der Massenschwerpunkt "S" mit ausreichenden Abständen "a" und "b" über und zwischen der Aufstellstütze 8 und dem Scheitelpunkt 9a des Teilabschnitts 9 des Rahmenteils 7 liegt. Die Standfestigkeit wird durch die äußerst flache Bauweise, d.h., durch den geringen Abstand des Bildschirmgeräts 15 von der Haspel 25 begünstigt. Die senkrechte Trageposition wird dadurch ermöglicht, daß das als Handgriff dienende Joch 3 genau über dem Massenschwerpunkt "S" liegt, was durch die beiden Pfeile angedeutet ist.

Die Figur 8 zeigt eine Draufsicht auf das Gerätegestell 1 mit einer Prinzipdarstellung der Haspel 25 und der Lösung der Standfestigkeitsprobleme. Das Maß "L" beträgt etwa 48 cm und das Maß "B2" etwa 30 cm, wobei die Verhältnisse weitgehend maßstabsgerecht dargestellt sind. Die Breite des Gehäuses 12 kann mit etwa 21 cm angegeben werden, wobei innerhalb dieser Breite auch die beiden Schenkel 2a und 2b des ersten Rahmenteils 2 liegen. Die Grenzlinien zwischen der zylindrischen Rückseite des Gehäuses 12 und dessen unter 50 Grad geneigter Vorderseite 13 und dieser Vorderseite 13 und dem Deckel 23 sind gestrichelt dargestellt.

Die vorstehend beschriebenen wirksamen Breiten "B1" und "B2" (Figuren 2, 3 und 8) definieren den maximalen Abstand von Füßen, Beinen, Stellen, Stützringen, Kanten oder Flächen, die nachstehend der Einfachheit halber als Aufstellpunkte bezeichnet werden, an denen das gesamte Inspektionsgerät auf der Aufstellfläche 10 ruht, da z. B. überstehende Rundungen zur Standfestigkeit nichts beitragen. Im vorliegenden Falle werden die wirksamen Breiten "B1" und "B2" und die Länge "L" durch vier Aufstellpunkte P1, P2, P3 und P4 vorgegeben.

Gemäß Figur 8 ergibt sich folgendes, wobei die Verhältnisse in der Projektion auf die Aufstellfläche zu sehen sind: Für den Fall eines Kippens gelten hierfür die vier durch die Aufstellpunkte P1/P2, P1/P3, P2/P4 und P3/P4 gelegten dicken strichpunktierten Linien. Die kleinsten Kippradien des Massenschwerpunktes "S" sind Mit "R" bezeichnet. Es ist ersichtlich, daß dieser Massenschwerpunkt "S" in waagrechter Richtung in jedem Falle einen ausreichenden Abstand von den virtuellen Kipplinien P1/P3 und P2/P4 hat, begünstig auch durch die tiefe Schwerpunktlage. Die beiden Kreise K1 und K2 zeigen den Außenumfang und die Öffnung der Haspel 25. Gemäß den weitere oben gemachten Ausführungen wird das Signalkabel 29 in etwa tangential durch die Öffnung mit dem Kreis K2 ein- und ausgeführt. Dies wird durch die Lage der Hülse 30 erzwungen, in der sich im Betriebszustand die Führungs- und Bremsvorrichtung 31 gemäß Figur 5 befindet, was in Figur 8 der Einfachheit halber nicht mehr dargestellt ist.

Das weiter oben beschriebene Höhenmaß "HS" für den Abstand des Massenschwerpunktes "S" von der Aufstellfläche 10 ist auch unter folgenden Gesichtspunkten zu sehen: Die Lage des Massenschwerpunktes "S" hängt natürlich auch von der Länge bzw. vom Gewicht des jeweils auf der Haspel 25 befindlichen Signalkabels 29 ab. Mit zunehmendem Ausschub dieses Signalkabels 29 verlagert sich also der Massenschwerpunkt "S" nach oben. Dieser Vorgang hat aber bei der großen Standfestigkeit des Inspektionsgeräts keine negativen Auswirkungen, da sich der Massenschwerpunkt ausschließlich in der Symmetrieebene des Gerätegestells 1 verlagert. Die Werte für das minimale und maximale Höhenmaß "HS" sind im übrigen ohne weiteres bestimmbar.

Das kompakte Inspektionsgerät, das eine in sich geschlossene voll funktionsfähige Baueinheit darstellt und mit Netzspannung, transformierter Kleinspannung und/oder Akkumulatoren betrieben werden kann, läßt sich von der Bedienungsperson leicht so ausrichten, daß die Bedienungsperson sowohl den gegenüber dem Gerätegestell 1 unbeweglichen Bildschirm 14 beobachten als auch das Signalkabel 29 mit der VideoKamera 33 in ergonomischer Haltung in beiden Richtungen knickfrei bedienen kann. Durch die Kapselung des Inspektionsgeräts lassen sich auch die Haspel 25 mit dem eingezogenen Signalkabel 29 und die VideoKamera 33 von der Bodenseite her mit einem Wasserstrahl abspritzen, was insofern von Bedeutung ist, als das Signalkabel 29 und die VideoKamera 33 oft stark verschmutzt aus der zu inspizierenden Rohrleitung zurückgeholt werden.

### Bezugszeichenliste:

- 1: Gerätegestell
- 2: erstes Rahmenteil
- 2a: Schenkel
- 2b: Schenkel
- 3: Joch
- 4: Biegestellen
- 5: zweites Rahmenteil
- 6: Aufstellstütze
- 6a: Stützringe
- 7: drittes Rahmenteil
- 8: Aufstellstütze
- 6a: Stützringe
- 9: Teilabschnitt
- 9a: Scheitelpunkt
- 10: Aufstellfläche
- 11: Boden
- 12: Gehäuse
- 13: Vorderseite
- 14: Bildschirm
- 15: Bildschirmgerät
- 16: Seitenwände
- 17: Seitenwände
- 18: Schlitze
- 19: Pfeil
- 20: Deckel
- 21: Klinke
- 22: Ablagefach
- 23: Deckel
- 24: Drehlager
- 25: Haspel
- 26: Speichen
- 27: Enden
- 28: Ring
- 29: Signalkabel
- 30: Hülse
- 31: Führungs- und Bremsvorrichtung
- 31a: Führungsbügel
- 31 b: oberes Ende
- 32: Aufnahme
- 33: Video-Kamera 33
- 33a: Sichtfenster
- 34: Schraubenfeder
- 34a: Abschnitt
- 34b: Abschnitt
- 34c: Abschnitt
- 35: Anschlußkabel
- 36: Übergangsstück
- 37: Schraubenfeder
- 37': Lage
- 37a: Abschnitt
- 37b: Abschnitt
- 37c: Abschnitt

- A-A: Drehachse
- "a": Abstand
- "b": Abstand
- "B1": wirksame Breite
- "B2": wirksame Breite
- "DS": Abstand
- "E": Symmetrieebene
- "HS": Höhenmaß
- K1: Kreis
- K2: Kreis
- "L": Länge
- P1: Aufstellpunkt
- P2: Aufstellpunkt
- P3: Aufstellpunkt
- P4: Aufstellpunkt
- "R": Kippradien
- "S": Massenschwerpunkt

## Patentansprüche

1. Tragbare Geräteeinheit für die Inspektion von Hohlräumen, insbesondere von Rohrleitungen, mit einer Video-Kamera (33), einem Signalkabel (29), und mit einem Gerätegestell (1), das mittels Aufstellstützen (6, 8) zur Abstützung in Betriebsstellung auf einer Aufstellfläche (10) dient und an dem ein Bildschirmgerät (15) und eine Haspel (25) für das Signalkabel (29) angeordnet sind, wobei
a) das Gerätegestell (1) aus Rahmenteilen mit in Betriebstellung waagrechten Schenkeln (2a, 2b) besteht und in Längsrichtung eine in Betriebstellung vertikale Symmetrieebene (E), eine Mittenlängsachse und eine in der Betriebsstellung zumindest im wesentlichen waagrechte Bezugsplattform aufweist, auf der das Bildschirmgerät (15) angeordnet ist,
b) die Haspel (25) in Betriebsstellung waagrecht und mit senkrechter Drehachse (A-A) unter der Bezugsplattform angeordnet ist,
c) an mindestens einem Ende des Gerätegestells (1) eine der Aufstellstützen (8) angeordnet ist, die gegenüber der Aufstellfläche (10) eine wirksame Breite ("B2") besitzt, die größer ist als das Höhenmaß ("HS") des Massenschwerpunktes ("S") der Geräteeinheit über der Aufstellfläche (10) in der Betriebsstellung,
d) am jeweils anderen Ende des Gerätsgestells (1) eine weitere der Aufstellstützen (6) angeordnet ist,
**dadurch gekennzeichnet, daß**
e) der Bildschim (14) gegenüber dem Gerätegestell (1) unbeweglich angeordnet ist, und die optische Achse des Bildschirmgeräts (15) in der in Betriebstellang vertikalen Symmetrieebene (E) verläuft, die durch die Mittenlängsachse der Bezugsplattform des Gerätegestells (1) verläuft,
f) die Anordnung von unbeweglichem Bildschirmgerät (15), und in Betriebstellang waagrechter Haspel (25) spiegelsymmetrisch zu der in Betriebstellung vertikalen Symmetrieebene ("E") ausgebildet ist, in der auch die Längsmittenachse des Gerätegestells (1) und der Massenschwerpunkt ("S") der Geräteeinheit liegen.

2. Geräteeinheit nach Anspruch 1, **dadurch gekennzeichnet, daß** die am jeweils anderen Ende des Gerätegestells (1) angeordnete weitere Aufstellstütze (6) zwei um ein Maß ("B1") beabstandete Aufstellpunkte (P3, P4) besitzt,

3. Geräteeinheit nach mindestens einem der Ansprüche 1 und 2, **dadurch gekennzeichnet, daß** das Bildschirmgerät (15) zumindest im wesentlichen über der Mittenlängsachse der Bezugsplattform des Gerätegestells (1) angeordnet ist und daß die mindestens eine Aufstellstütze (8) mit ihrer wirksamen Breite ("B2") nach beiden Seiten über die Seitenwände (17) des Bildschirmgeräts (15) übersteht.

4. Geräteeinheit nach mindestens einem der Ansprüche 1 bis 3, **dadurch gekennzeichnet, daß** daß Gerätegestell (1) ein erstes Rahmenteil (2) mit zwei parallelen Schenkeln (2a, 2b) besitzt, zwischen denen ein Boden (11) als Bezugsplattform angeordnet ist, wobei die parallelen Schenkel (2a, 2b) in Betriebsstellung zumindest im wesentlichen parallel zur Aufstellfläche (10) verlaufen.

5. Geräteeinheit nach Anspruch 4, **dadurch gekennzeichnet, daß** die beiden Schenkel (2a, 2b) des ersten Rahmenteils (2) vor dem Bildschirmgerät (15) durch ein Joch (3) miteinander verbunden sind, das oberhalb der Bezugsplattform liegt und einen Handgriff zum Tragen bildet.

6. Geräteeinheit nach Anspruch 4, **dadurch gekennzeichnet, daß** das erste Rahmenteil (2) mit einem zweiten Rahmenteil (5) verbunden ist, das unterhalb des als Handgriff vorgesehenen Jochs (3) die weitere Aufstellstütze (6) bildet.

7. Geräteeinheit nach Anspruch 4, **dadurch gekennzeichnet, daß** das Gerätegestell (1) hinter dem Bildschirmgerät (15) ein drittes Rahmenteil (7) besitzt, das die wirksame Breite ("B2") bestimmt.

8. Geräteeinheit nach Anspruch 7, **dadurch gekennzeichnet, daß** das dritte Rahmenteil (7) auf dem Umfang geschlossen ausgebildet ist und einen unteren Teilbereich in Form eines Ovals besitzt, dessen unterer Teilabschnitt eine weitere Aufstellstütze (8) bildet, und einen oberen Teilabschnitt (9) besitzt, der in der Mitte U-förmig nach oben gebogen ist, wobei dieses dritte Rahmenteil (7) senkrecht zu den Schenkeln (2a, 2b) des ersten Rahmenteils ausgerichtet ist.

9. Geräteeinheit nach mindestens einem der Ansprüche 1 bis 8, **dadurch gekennzeichnet, daß** die Bezugsplattform auf ihrer Oberseite ein Gehäuse (12) für die Unterbringung des Bildschirmgeräts (15) besitzt.

10. Geräteeinheit nach mindestens einem der Ansprüche 1 bis 9, **dadurch gekennzeichnet, daß** an der Bezugsplattform ein nach unten ragendes Drehlager (24) mit einer Drehachse (A-A) für die Haspel (25) angeordnet ist.

11. Geräteeinheit nach mindestens einem der Ansprüche 1 bis 10, **dadurch gekennzeichnet, daß** die Haspel (25) aus einem Drahtkorb mit im wesentlichen radialen Speichen (26) besteht, die an ihren der Drehachse (A-A) abgekehrten Enden (27) angenähert halbkreisförmig nach oben und einwärts gebogen und durch einen Ring (28) verbunden sind, der einen geringeren Durchmesser aufweist als die am weitesten außen liegenden Umkehrpunkte der Speichen (26).

12. Geräteeinheit nach Anspruch 9, **dadurch gekennzeichnet, daß** das Gehäuse (12) eine Vorderseite (13) besitzt, die unter einem Winkel von 10 bis 80 Grad zur Waagrechten geneigt ist und in der der Bildschirm (14) angeordnet ist.

13. Geräteeinheit nach Anspruch 12, **dadurch gekennzeichnet, daß** die Vorderseite (13) des Gehäuses (12) unter einem Winkel von 40 bis 60 Grad zur Waagrechten geneigt ist und in der der Bildschirm (14) angeordnet ist.

14. Geräteeinheit nach Anspruch 9, **dadurch gekennzeichnet, daß** das Gehäuse (12) einen schwenkbaren Deckel (20) mit Seitenwänden (16) besitzt, der in aufgeklappter Stellung den Bildschirm (14) gegen Ober- und Seitenlicht abschirmt.

15. Geräteeinheit nach Anspruch 14, **dadurch gekennzeichnet, daß** das Gehäuse (12) beiderseits des Bildschirms (14) seitliche Schlitze (18) besitzt, in die die Seitenwände (16) beim Einklappen des Deckels (20) einschwenkbar sind.

16. Geräteeinheit nach Anspruch 9, **dadurch gekennzeichnet, daß** das Gehäuse (12) vor und unter dem Bildschirm (14) ein Ablagefach (22) für Zubehörteile besitzt.

17. Geräteeinheit nach Anspruch 16, **dadurch gekennzeichnet, daß** dem Ablagefach (22) ein weiterer Deckel (23) zugeordnet ist.

18. Geräteeinheit nach mindestens einem der Ansprüche 1 bis 17, **dadurch gekennzeichnet, daß** seitlich am Gerätegestell (1) eine Hülse (30) befestigt ist, durch die das Signalkabel (29) in etwa tangentialer Richtung in die Haspel (25) herausziehbar und einschiebbar ist.

19. Geräteeinheit nach Anspruch 18, **dadurch gekennzeichnet, daß** in der Hülse (30) eine Führungs- und Bremsvorrichtung (31) für das Signalkabel (29) angeordnet ist.

20. Geräteeinheit nach Anspruch 19, **dadurch gekennzeichnet, daß** die Führungs- und Bremsvorrichtung (31) aus einer Schraubenfeder (37) besteht, deren der Hülse (30) abgekehrtes Ende mit dem Signalkabel bewegbar ist.

21. Geräteeinheit nach Anspruch 19, **dadurch gekennzeichnet, daß** die Führungs- und Bremsvorrichtung (31) aus einem Schlauch aus einem elastomeren Material besteht.

22. Geräteeinheit nach den Ansprüchen 1, 5 und 7, **dadurch gekennzeichnet, daß** die Mitte des Jochs (3) und der Massenschwerpunkt ("S") der Geräteeinheit auf einer Geraden liegen die in Normalenrichtung zum dritten Rahmenteil (7) verläuft.

23. Geräteeinheit nach Anspruch 22, **dadurch gekennzeichnet, daß** der Massenschwerpunkt ("S") vom dritten Rahmenteil (7) einen Abstand ("DS") hat, der zwischen dem 0,3-Fachen und dem 0,5-Fachen der Länge ("L") zwischen den Aufstellstützen (6, 8) beträgt.

24. Geräteeinheit nach mindestens einem der Ansprüche 1 und 19, **dadurch gekennzeichnet, daß** die Video-Kamera (33) am Ende einer Schraubenfeder (34) angeordenet ist, deren anderes Ende in das freie Ende der Führungs- und Bremsvorrichtung (31) einsteckbar ist.

25. Geräteeinheit nach mindestens einem der Ansprüche 1 und 24, **dadurch gekennzeichnet, daß** die Video-Kamera (33) zu Transportzwecken in eine Aufnahme (32) einsteckbar ist, die mit der Hülse (30) fluchtet.

26. Geräteeinheit nach Anspruch 1, **dadurch gekennzeichnet, daß** das Gerätegestell (1) aus gebogenen Rahmenprofilen besteht.

27. Geräteeinheit nach Anspruch 4, **dadurch gekennzeichnet, daß** das Bildschirmgerät (15) über dem Boden (11) angeordnet ist.

28. Geräteeinheit nach Anspruch 10, **dadurch gekennzeichnet, daß** in dem Drehlager (24) eine Schleifringanordnung für die Signalübertragung angeordnet ist.

29. Geräteeinheit nach Anspruch 24, **dadurch gekennzeichnet, daß** das Gerätegestell (1) Aufstellpunkte (P1, P2, P3, P4) besitzt, die den Verlauf von virtuellen Kipplinien und tangierenden Kippradien (R) innerhalb der Aufstellfläche (10) definieren, und daß der Massenschwerpunkt (S) in waagrechter Richtung in der Symmetrieebene (E) und im Innern der Kipplinien einen Abstand von allen Kipplinien hat.

## Claims

1. Portable apparatus unit for inspection of cavities, in particular in pipes, comprising a video camera (33), a signal cable (29) and a device frame (1) which offers by means of setup supports (6, 8) support in an operating position on a setup surface, and on which is arranged a monitor (15) and a spool (25) for the signal cable (29), and
a. the apparatus frame (1) is composed of frame sections with horizontal shanks (2a, 2b) in the operating position, comprising in the longitudinal direction a vertical symmetry plane (E) in the operating position and a middle longitudinal axis and a reference platform which is at least substantially horizontal in the operating position, on which is arranged the monitor (15);
b. the spool (25) is arranged to be horizontal in the operating position and with vertical rotary axis (A-A) below the reference platform;
c. at least at one end of the apparatus frame (1) is arranged one of the setup supports (8) which has relative to the setup surface (10) an effective width ("B2") in excess of the height dimension ("HS") of the mass centre of gravity ("S") of the apparatus unit above the setup surface (10) in the operating position;
d. at the respective other end of the apparatus frame (1) is arranged another one of the further setup supports (6),
**characterised in that**
e. the monitor (14) is arranged to be non movable relative to the apparatus frame (1), and the optical axis of the monitor (15) extends in the operating position in the vertical symmetry plane (E) extending through the middle longitudinal axis of the reference platform of the apparatus frame (1);
f. the arrangement is of non movable monitor (15) and horizontal spool (25) mirror-sym metrically to the vertical symmetry plane ("E") in the operating position in which the longitudinal middle axis of the apparatus frame (1) and the mass point of gravity ("S") are also located.

2. Apparatus unit according to Claim 1, **characterised in that** the additional setup support (6) arranged at the respective other end of the apparatus frame (1) comprises two setup points (P3, P4) spaced by a dimension ("B1").

3. Apparatus unit according to at least one of Claims 1 and 2, **characterised in that** the monitor (15) is positioned at least substantially over the middle longitudinal axis of the reference platform of the apparatus frame (1), and the at least one setup support (8) projects with its effective width ("B2") towards both sides over the side walls (17) of the monitor (15).

4. Apparatus unit according to at least one of Claims 1 to 3, **characterised in that** the apparatus frame (1) includes a first frame section (2) with two parallel shanks (2a, 2b) between which is arranged a base (11) as reference platform, and the parallel shanks (2a, 2b) in operating position extend at least substantially parallel to the setup surface (10).

5. Apparatus unit according to Claim 4, **characterised in that** both shanks (2a, 2b) of the first frame section (2) are interconnected in front of the monitor (15) by a yoke (3) which lies above the reference platform and serves as a carrying handle.

6. Apparatus unit according to Claim 4, **characterised in that** the first frame section (2) is connected to a second frame section (5) which establishes the additional setup support (6) below the yoke (3) which is provided as a handle.

7. Device unit according to Claim 4, **characterised in that** the apparatus frame (1) has behind the monitor (15) a third frame section (7) which determines the effective width ("B2").

8. Apparatus unit according to Claim 7, **characterised in that** the third frame section (7) is designed to be peripherally sealed and comprises a lower sectional area in the shape of an oval the lower part section of which establishes a further setup support (8), and it comprises an upper sectional area (9) which is in the middle bent upward in the shape of a U, and this third frame section (7) is oriented perpendicularly to the shanks (2a, 2b) of the first frame section.

9. Apparatus unit according to at least one of Claims 1 to 8, **characterised in that** the reference platform has on its top a housing (12) for accommodating the monitor (15).

10. Apparatus unit according to at least one of Claims 1 to 9, **characterised in that** on the reference platform is arranged a downward projecting rotary mount (24) with a rotary axis (A-A) for the spool (25).

11. Apparatus unit according to at least one of Claims 1 to 10, **characterised in that** the spool (25) is composed of a wire basket with essentially radial spokes (26) which are at the ends (27) facing away from the rotary axis (A-A) virtually semi-circularly upward and inward bent and connected by a ring (28) which has a smaller diameter than the return points of the spokes (26) located the furthest outside.

12. Apparatus unit according to Claim 9, **characterised in that** the housing (12) has a front (13) which is slanted at an angle between 10 and 80° relative to the horizontal and wherein the monitor (14) is accommodated.

13. Apparatus unit according to Claim 12, **characterised in that** the front (13) of the housing (12) is slanted at an angle between 40 and 60° relative to the horizontal and wherein the monitor (14) is arranged.

14. Apparatus unit according to Claim 9, **characterised in that** the housing (12) comprises a pivotal cover (20) with side walls (16) which, in its opened up position screens the monitor (14) from top and side lights.

15. Apparatus unit according to Claim 14, **characterised in that** the housing comprises on both sides of the monitor (14) lateral slots (18) into which the sidewalls (16) are pivoted when shutting the cover (20).

16. Apparatus unit according to Claim 9, **characterised in that** the housing (12) comprises in front of and below the monitor (14) a shelf (22) for accessories.

17. Apparatus unit according to Claim 16, **characterised in that** an additional cover (23) is associated with the shelf (22).

18. Apparatus unit according to at least one of Claims 1 to 17, **characterised in that** laterally at the apparatus frame (1) is mounted a sleeve (30) through which the signal cable (29) can be pulled out of or inserted into the spool (25) in approximately tangential direction.

19. Apparatus unit according to Claim 18, **characterised in that** a guiding and braking device (31) for the signal cable (29) is arranged in the sleeve (30).

20. Apparatus unit according to Claim 19, **characterised in that** the guiding and braking device (31) is composed of a threaded spring (37), its end facing away from the sleeve (30) being movable with the signal cable.

21. Apparatus unit according to Claim 19, **characterised in that** the guiding and braking device (31) is composed of a hose of an elastomer material.

22. Apparatus unit according to Claims 1, 5 and 7, **characterised in that** the middle of the yoke (3) and the mass point of gravity ("S") of the apparatus unit lies on a straight which extends in normal direction relative to the third frame section (7).

23. Apparatus unit according to Claim 22, **characterised in that** the mass point of gravity ("S") is spaced from the third frame section (7) by a distance ("DS") between 0.3 times and 0.5 times the length ("L") between the setup supports (6, 8).

24. Apparatus unit according to at least one of Claims 1 and 19, **characterised in that** the video camera (33) is arranged at the end of a threaded spring (34) the other end of which is insertible into the free end of the guiding and braking device (31).

25. Apparatus unit according to at least one of Claims 1 and 24, **characterised in that** the video camera (33) is for transport purposes placed in a receptacle (32) which is flush with the sleeve (30).

26. Apparatus unit according to Claim 1, **characterised in that** the apparatus frame (1) 1s made of bent frame profiles.

27. Apparatus unit according to Claim 4, **characterised in that** the monitor (15) is arranged above base (11).

28. Apparatus unit according to Claim 10, **characterised in that** a slip-ring arrangement for signal transmission is arranged in a rotary mount (24).

29. Apparatus device according to Claim 24, **characterised in that** the apparatus frame (1) comprises setup points (P1, P2, P3, P4) which define the course of virtual tip lines and tangent tip radii (R) within the setup surface (10), and the mass point of gravity (S) has in horizontal direction in the symmetry plane (E) and inside the tipping lines a distance from all tip lines.

## Revendications

1. Appareil formant unité portative pour l'inspection de cavités, en particulier de conduites tubulaires, comprenant une caméra vidéo (33), un câble à signaux (29), et un châssis d'appareil (1) qui sert au soutien, en position de fonctionnement, sur une surface de placement (10) au moyen de soutiens de placement (6, 8) et sur lequel sont agencés un dispositif à écran (15) et un dévidoir (25) pour le câble à signaux (29), dans lequel :
a) le châssis d'appareil (1) est composé de parties de cadre avec des bras (2a, 2b) horizontaux en position de fonctionnement et comportant en direction longitudinale un plan de symétrie (E) vertical en position de fonctionnement, un axe longitudinal médian et une plate-forme de référence au moins sensiblement horizontale, sur laquelle est agencé le dispositif à écran (15),
b) le dévidoir (25) est agencé, en position de fonctionnement, horizontalement au-dessous de la plate-forme de référence horizontalement et avec axe de rotation (A-A) vertical,
c) à au moins une extrémité du châssis d'appareil (1) est agencé l'un des soutiens de placement (8) qui possède à l'opposé de la surface de placement (10) une largeur efficace ("B2") supérieure à la dimension en hauteur ("HS") du centre de gravité ("S") de l'appareil au-dessus de la surface de placement (10) dans la position de fonctionnement,
d) à l'autre extrémité respective du châssis d'appareil (1) est agencé un autre des soutiens de placement (6),
**caractérisé en ce que** :
e) l'écran (14) est agencé immobile par rapport au châssis d'appareil (1) et l'axe optique du dispositif à écran (15) s'étend dans le plan de symétrie (E) vertical en position de fonctionnement, qui s'étend à travers l'axe longitudinal médian de la plate-forme de référence du châssis d'appareil (1),
f) fagéncement du dispositif à écran (15) immobile et du dévidoir (25) horizontal en position de fonctionnement est réalisé à symétrie plane par rapport au plan de symétrie ("E") vertical en position de fonctionnement, dans lequel sont également disposés l'axe médian longitudinal du châssis d'appareil (1) et le centre de gravité ("S") de l'appareil.

2. Appareil selon la revendication 1, **caractérisé en ce que** l'autre soutien de placement (6) agencé à l'autre extrémité respective du châssis d'appareil (1) possède deux points de placement (P3, P4) écartés d'une distance ("B1").

3. Appareil selon l'une au moins des revendications 1 et 2, **caractérisé en ce que** le dispositif à écran (15) est agencé au moins sensiblement au-dessus de l'axe longitudinal médian de la plate-forme de référence du châssis d'appareil (1), et **en ce que** ledit au moins un soutien de placement (8) dépasse avec sa largeur efficace ("B2") au-delà des parois latérales (17) du dispositif à écran (15) sur les deux côtés.

4. Appareil selon l'une au moins que des revendications 1 à 3, **caractérisé en ce que** le châssis d'appareil (1) possède une première partie de cadre (2) avec deux bras parallèles (2a, 2b), entre lesquels est agencé à un plancher (11) à titre de plate-forme de référence, et **en ce que** les bras parallèles (2a, 2b) s'étendent au moins sensiblement parallèlement à la surface de placement (10) dans la position de fonctionnement.

5. Appareil selon la revendication 4, **caractérisé en ce que** les deux bras (2a, 2b) de la première partie de cadre (2) sont reliés l'un à l'autre devant le dispositif à écran (15) par un étrier (3) qui est situé au-dessus de la plate-forme de référence et qui forme une poignée pour le transport.

6. Appareil selon la revendication 4, **caractérisé en ce que** la première partie de cadre (2) est reliée à une deuxième partie de cadre (5) qui forme l'autre soutien de placement (6) au-dessous de l'étrier (3) prévu à titre de poignée.

7. Appareil selon la revendication 4, **caractérisé en ce que** le châssis d'appareil (1) possède derrière le dispositif à écran (15) une troisième partie de cadre (7) qui détermine la largeur efficace ("B2").

8. Appareil selon la revendication 7, **caractérisé en ce que** la troisième partie de cadre (7) est réalisée fermée sur la périphérie et possède une zone partielle inférieure sous forme d'un ovale, dont le tronçon partiel inférieur forme un autre soutien de placement (8), et possède un tronçon partiel supérieur (9) recourbé au milieu vers le haut en formant un U, de sorte que cette troisième partie de cadre (7) est dressée perpendiculairement aux bras (2a, 2b) de la première partie de cadre.

9. Appareil selon l'une au moins des revendications 1 à 8, **caractérisé en ce que** la plate-forme de référence possède sur sa face supérieure un boîtier (12) pour le logement du dispositif à écran (15).

10. Appareil selon l'une au moins des revendications 1 à 9, **caractérisé en ce qu'**un palier de rotation (24) dépassant vers le bas et présentant un axe de rotation (A-A) pour le dévidoir (25) est agencé sur la plate-forme de référence.

11. Appareil selon l'une au moins des revendications 1 à 10, **caractérisé en ce que** le dévidoir (25) est constitué par un panier en fils avec des rayons sensiblement radiaux (26) qui sont recourbés approximativement en forme de demi-cercle vers le haut et vers l'intérieur à leurs extrémités (27) détournées de l'axe de rotation (A-A) et qui sont reliés par un anneau (28) lequel présente un diamètre inférieur au point d'inversion des rayons (26) situé le plus loin à l'extérieur.

12. Appareil selon la revendication 9, **caractérisé en ce que** le boîtier (12) possède une face antérieure (13) inclinée sous un angle de 10 à 80° par rapport à l'horizontale et dans laquelle est agencé l'écran (14).

13. Appareil selon la revendication 12, **caractérisé en ce que** la face antérieure (13) du boîtier (12) est inclinée sous un angle de 40 à 60° par rapport à l'horizontale, et **en ce que** l'écran (14) est agencé dans celle-ci.

14. Appareil selon la revendication 9, **caractérisé en ce que** le boîtier (12) possède un couvercle basculant (20) avec des parois latérales (16), lequel protège, dans la position relevée, l'écran (14) à l'encontre de la lumière provenant du haut et des côtés.

15. Appareil selon la revendication 14, **caractérisé en ce que** le boîtier (12) possède sur les deux côtés de l'écran (14) des fentes latérales (18) dans lesquelles les parois latérales (16) sont susceptibles de se rétracter lors du rabattement du couvercle (20).

16. Appareil selon la revendication 9, **caractérisé en ce que** le boîtier (12) possède un casier de déposition (22) pour des pièces accessoires devant et dessous l'écran (14).

17. Appareil selon la revendication 16, **caractérisé en ce qu'**un autre couvercle (23) est associé au casier de déposition (22).

18. Appareil selon l'une au moins des revendications 1 à 17, **caractérisé en ce qu'**une douille (30) est agencée latéralement sur le châssis d'appareil (1), à travers laquelle le câble à signaux (29) peut être extrait et introduit dans le dévidoir (25) approximativement en direction tangentielle.

19. Appareil selon la revendication 18, **caractérisé en ce qu'**un dispositif de guidage et de freinage (31) pour le câble à signaux (29) est agencé dans la douille (30).

20. Appareil selon la revendication 19, **caractérisé en ce que** le dispositif de guidage et de freinage (31) est constitué par un ressort hélicoïdal (37) dont l'extrémité détournée de la douille (30) est déplaçable avec le câble à signaux.

21. Appareil selon la revendication 19, **caractérisé en ce que** le dispositif de guidage et de freinage (31) est constitué par un tuyau en matériau élastomère.

22. Appareil selon les revendications 1, 5 et 7, **caractérisé en ce que** le milieu de l'étrier (3) et le centre de gravité ("S") de l'appareil d'inspection sont disposés sur une droite qui s'étend en direction perpendiculaire à la troisième partie de cadre (7).

23. Appareil selon la revendication 22, **caractérisé en ce que** le centre de gravité ("S") présente par rapport à la troisième partie de cadre (7) une distance ("DS") qui est comprise entre 0,3 et 0,5 fois la longueur ("L") entre les soutiens de placement (6, 8).

24. Appareil selon l'une au moins des revendications 1 et 19, **caractérisé en ce que** la caméra vidéo (33) est agencée à l'extrémité d'un ressort hélicoïdal (34) dont l'autre extrémité est susceptible d'être enfichée dans l'extrémité libre du dispositif de guidage et de freinage (31).

25. Appareil selon l'une au moins des revendications 1 et 24, **caractérisé en ce que** pour des besoins de transport, la caméra vidéo (33) est susceptible d'être enfichée dans un logement (32) qui est aligné avec la douille (30).

26. Appareil selon la revendication 1, **caractérisé en ce que** le châssis d'appareil (1) est formé de profils de cadre cintrés.

27. Appareil selon la revendication 4, **caractérisé en ce que** le dispositif à écran (15) est agencé au-dessus du plancher (11).

28. Appareil selon la revendication 10, **caractérisé en ce qu'**un agencement à bague de friction est agencé dans le palier de rotation (24) pour la transmission des signaux.

29. Appareil selon la revendication 24, **caractérisé en ce que** le châssis d'appareil (1) possède des points de placement (P1, P2, P3, P4) qui définissent le tracé de lignes de basculement virtuelles et de rayons de basculement tangents (R) à l'intérieur de la surface de placement (10), et **en ce que** le centre de gravité (S) présente, en direction horizontale dans le plan de symétrie (E) et à l'intérieur des lignes de basculement, une distance depuis toutes les lignes de basculement.
